# EUROPEAN PATENT APPLICATION

(11) **EP 4 628 957 A1**
(43) Date of publication of application: **08.10.2025**
(21) Application number: 23905560.1
(22) Date of filing: 15.11.2023
(51) Int. Cl.: G02B 6/38

(54) **OPTICAL FIBER CONNECTOR HEAD AND OPTICAL FIBER CONNECTOR**

(30) Priority: 23.12.2022 CN 202211669012
(71) Applicant: Huawei Technologies Co., Ltd., Shenzhen, Guangdong 518129 (CN)
(72) Inventor: TANG, Feng, Shenzhen, Guangdong 518129 (CN); MA, Zhigang, Shenzhen, Guangdong 518129 (CN); LI, Weibo, Shenzhen, Guangdong 518129 (CN)
(74) Representative: Maiwald GmbH
(86) International application number: PCT/CN2023/131718
(87) International publication number: WO 2024/131390

(57) **Abstract**

An optical fiber connector plug (200) and an optical fiber connector are provided. The optical fiber connector plug (200) includes a plug assembly (20), a pressure sleeve (30), and an outer housing kit (40). The plug assembly (20) has a front end (20a) and a rear end (20b), the front end (20a) is configured to match an optical fiber adapter (100), and the rear end (20b) is used for insertion of an optical cable (10). The pressure sleeve (30) is connected to the rear end (20b), and is configured to fasten the optical cable (10). The outer housing kit (40) is sleeved outside the plug assembly (20) and the pressure sleeve (30), and is detachably connected to the plug assembly (20). The optical fiber connector includes the optical fiber adapter (100) and the optical fiber connector plug (200). The optical fiber adapter (100) is detachably connected to the optical fiber connector plug (200).

## Description

The present disclosure claims priority to Chinese Patent Application No. 202211669012.4, filed on December 23, 2022 and entitled "OPTICAL FIBER CONNECTOR PLUG AND OPTICAL FIBER CONNECTOR", which is incorporated herein by reference in its entirety.

### TECHNICAL FIELD

The present disclosure relates to the field of optical communication technologies, and in particular, to an optical fiber connector plug and an optical fiber connector.

### BACKGROUND

An optical fiber connector is an important device for optical fiber access. The optical fiber connector mainly includes two parts: an optical fiber connector plug and an optical fiber adapter. During use, the optical fiber connector plug is interconnected to the optical fiber adapter.

The optical fiber connector plug is connected to an end of an optical cable, and an optical fiber in the optical cable is fastened inside the optical fiber connector plug. The optical fiber connector plug includes a plurality of parts. An assembly process of the optical fiber connector plug is typically performed while the optical cable is connected. Completion of the assembly of the optical fiber connector plug is accompanied with the connection between the optical fiber connector plug and the optical cable.

The optical fiber connector plug containing many parts results in complex assembly, and this is not conducive to automated production.

### SUMMARY

The present disclosure provides an optical fiber connector plug and an optical fiber connector, to overcome a problem in related technologies. Technical solutions of the optical fiber connector plug and the optical fiber connector are as follows:
According to a first aspect, the present disclosure provides an optical fiber connector plug, including a plug assembly, a pressure sleeve, and an outer housing kit. The plug assembly has a front end and a rear end, the front end is configured to match an optical fiber adapter, and the rear end is used for insertion of an optical cable; the pressure sleeve is connected to the rear end, and is configured to fasten the optical cable; and the outer housing kit is sleeved outside the plug assembly and the pressure sleeve, and is detachably connected to the plug assembly.

Based on the foregoing feature, when the optical fiber connector plug is connected to the optical cable, the optical cable may be inserted from the rear end of the plug assembly, then the optical cable is fastened by using the pressure sleeve, and finally the outer housing kit is sleeved outside the plug assembly and the pressure sleeve and is connected to the plug assembly. The optical fiber connector plug has only three parts. This is simple in structure and easy for assembly, and facilitates automated production.

In an example, the plug assembly includes an inner housing kit and a ferrule, and the ferrule is inserted into the inner housing kit and is locked with the inner housing kit in both an axial direction and a circumferential direction.

Based on the foregoing feature, when the optical fiber connector plug is connected to the optical cable, an optical fiber in the optical cable is inserted into the ferrule, and the optical fiber is limited by the ferrule, to avoid shaking of the optical fiber. The plug assembly is simple in structure, and the ferrule is fastened by using the inner housing kit. When the optical fiber connector plug is assembled, it is convenient to first independently assemble the plug assembly, and then assemble the plug assembly with the pressure sleeve and the outer housing kit in sequence. This facilitates operation, and facilitates assembly by using an automated production line.

In an example, the inner housing kit includes an inner housing and a support base, an inner side wall of the inner housing has a first inner flange, one end of the inner housing is sleeved outside one end of the support base, the inner housing is detachably connected to the support base, and the first inner flange is opposite to an end portion of the support base. An outer side wall of the ferrule has a first outer flange, two ends of the ferrule are respectively located in the inner housing and the support base, and the first outer flange is located between the first inner flange and the end portion of the support base.

Based on the foregoing feature, the first outer flange is matched by using the first inner flange of the inner housing and the end portion of the support base, to limit the ferrule in the axial direction, so that the ferrule is locked with the inner housing kit in the axial direction, to avoid loosening of the ferrule.

Optionally, the first outer flange has a limiting notch, a side of the first inner flange close to the first outer flange is provided with a first limiting protrusion, and the first limiting protrusion is located in the limiting notch. When the ferrule is mounted in the inner housing, the limiting notch on the first outer flange is aligned with the first limiting protrusion on the first inner flange. After the ferrule is mounted in place, the first limiting protrusion is located in the limiting notch, to limit rotation of the ferrule, so that the ferrule is locked with the inner housing in the circumferential direction.

In some examples, the plug assembly further includes an elastic component, and the elastic component is sleeved outside the ferrule, is located on a side of the first outer flange close to the support base, and abuts against the first outer flange and the support base. The first outer flange can be kept in contact with the first inner flange by using an elastic force of the elastic component, to avoid movement of the ferrule. In addition, when the optical fiber connector plug is interconnected to the optical fiber adapter, if the ferrule is pushed by an external force at the front end, the elastic component may be further subject to specific deformation, so that the ferrule is allowed to retract by a specific distance, to avoid damage to the ferrule. After the optical fiber connector plug is interconnected to the optical fiber adapter in place, the elastic force of the elastic component can further keep an end face of the ferrule tightly attached to the optical fiber adapter, to ensure normal transmission of a signal in the optical fiber.

In an example, the inner side wall of the inner housing has a first clamping slot, an outer side wall of the support base has a first boss, and the first boss is located in the first clamping slot and is clamped in the first clamping slot.

Based on the foregoing feature, when the inner housing is connected to the support base, only the inner housing and the support base need to be pushed relative to each other. In this way, the first boss is clamped in the first clamping slot, and a connection between the inner housing and the support base can be completed. This is easy for operation, and facilitates automated production.

In some examples, a side wall of the support base has a window, the window is located outside the inner housing, and an end portion at one end that is of the ferrule and that is located in the support base is located at the window.

Based on the foregoing feature, a connection status between the end portion of the ferrule and the optical fiber can be observed through the window, and an optical fiber connector plug not qualified for assembly can be found in time.

Optionally, the side wall of the support base has a limiting groove, the limiting groove is located at an end portion at one end of the support base away from the inner housing, and the limiting groove is configured to clamp a strength member in the optical cable. The strength member is connected to the support base through the limiting groove. When the optical fiber connector plug is pulled, a pulling force may be applied to the strength member, and an optical fiber inserted into the plug assembly is not subject to the pulling force, to avoid damage to the optical fiber.

Optionally, the outer side wall of the support base has a second boss, and the second boss is clamped in the outer housing kit.

After the plug assembly and the pressure sleeve are assembled, the outer housing kit is sleeved outside the plug assembly, and the outer housing kit is clamped by using the second boss. This is simple in structure and convenient for assembly, and facilitates automated assembly of the optical fiber connector plug.

In some examples, at one end of the ferrule close to the rear end, an inner wall of the ferrule is in a tapered shape. Based on the foregoing feature, the optical fiber can be more easily inserted into the ferrule.

In some examples, the outer housing kit includes an inner tube and an outer tube, the outer tube is sleeved outside the inner tube, the outer tube is locked with the inner tube in the axial direction and rotatable relative to the inner tube, the inner tube is sleeved outside the plug assembly, an annular interconnection slot is formed between the inner tube and the outer tube, and the annular interconnection slot is close to the front end and is configured to match the optical fiber adapter.

Because the outer tube is locked with the inner tube in the axial direction, before the optical fiber connector plug is assembled, the inner tube and the outer tube may be assembled in advance. This facilitates automated assembly of the optical fiber connector plug. The optical fiber connector plug is connected to the optical fiber adapter through the outer tube. The outer tube is sleeved outside the inner tube and can rotate. After the optical fiber connector plug is interconnected to the optical fiber adapter, the outer tube can be connected to and tightly locked with the optical fiber adapter by rotating the outer tube.

In an example, an outer side wall of the inner tube has a first stop portion and a second stop portion, and the first stop portion and the second stop portion are distributed at intervals in an axial direction of the inner tube. An inner side wall of the outer tube has a first axial limiting portion and a second axial limiting portion, and the first axial limiting portion and the second axial limiting portion are distributed at intervals in an axial direction of the outer tube. The first axial limiting portion and the second axial limiting portion are located between the first stop portion and the second stop portion, the first axial limiting portion abuts against the first stop portion, and the second axial limiting portion abuts against the second stop portion. The outer tube is limited in the axial direction from two ends through the first stop portion and the second stop portion respectively, so that the outer tube and the inner tube are mutually locked in the axial direction.

Optionally, the first axial limiting portion includes an inner spigot, the second axial limiting portion includes a second inner flange, and an inner diameter of the inner spigot is not less than an outer diameter of the second inner flange. The second inner flange has a first avoidance notch for allowing the second stop portion to pass through. Because the inner diameter of the inner spigot is not less than the outer diameter of the second inner flange, the outer tube may be sleeved from a tail end of the inner tube, so that the inner spigot is not blocked by the second stop portion. When the outer tube is sleeved, the outer tube may be rotated, so that the first avoidance notch is aligned with the second stop portion. As the outer tube is sleeved, the second stop portion passes through the first avoidance notch, and the inner spigot comes into contact with the first stop portion. In this case, if the outer tube is rotated again, the first avoidance notch is staggered from the second stop portion. In this way, the outer tube can be locked with the inner tube in the axial direction.

In some examples, a side wall of the inner tube has an opening, a side edge of the opening is connected to a fastener, and the fastener is clamped in the plug assembly. The fastener is configured to be clamped in the second boss on the outer side wall of the support base. When the outer housing kit is sleeved onto the plug assembly, the outer housing kit is sleeved from the rear end of the plug assembly, and the outer housing kit is pushed toward the front end, so that the fastener can be clamped in the second boss. This is easy for operation, and facilitates automated production.

Optionally, at one end of the inner tube away from the annular interconnection slot, an inner wall of the inner tube is in a tapered shape. An inner wall at the tail end is set to be in a tapered shape, so that the inner tube can be conveniently sleeved outside the optical cable. In addition, this can further facilitate sealing of the inner tube.

In some examples, the outer housing kit further includes a tail tube, and the tail tube is located at one end of the outer tube away from the annular interconnection slot and is sleeved outside the inner tube.

Based on the foregoing feature, a sealing position at the tail end of the inner tube is shielded through the tail tube, to provide protection. This facilitates prolongation of a service life of the optical fiber connector plug.

According to a second aspect, the present disclosure further provides an optical fiber connector, including an optical fiber adapter and the optical fiber connector plug according to the first aspect. The optical fiber adapter is detachably connected to the optical fiber connector plug.

### BRIEF DESCRIPTION OF DRAWINGS

FIG. 1 is a diagram of a structure of an optical network according to an embodiment of the present disclosure;
FIG. 2 is a diagram of a structure of an optical fiber connector plug according to an embodiment of the present disclosure;
FIG. 3 is a diagram of a structure of a plug assembly according to an embodiment of the present disclosure;
FIG. 4 is a diagram of a structure of an inner housing according to an embodiment of the present disclosure;
FIG. 5 is a diagram of a structure of a ferrule according to an embodiment of the present disclosure;
FIG. 6 is a diagram of a structure of a plug assembly according to an embodiment of the present disclosure;
FIG. 7 is a side view of an optical fiber connector plug according to an embodiment of the present disclosure;
FIG. 8 is a diagram of a structure of an outer housing kit according to an embodiment of the present disclosure;
FIG. 9 is a diagram of a structure of an outer tube according to an embodiment of the present disclosure;
FIG. 10 is a diagram of a structure of an inner tube according to an embodiment of the present disclosure;
FIG. 11 is a diagram of a structure of an inner tube according to an embodiment of the present disclosure;
FIG. 12 is a diagram of a structure of a tail tube according to an embodiment of the present disclosure;
FIG. 13 is a diagram of a structure of an optical fiber connector plug according to an embodiment of the present disclosure;
FIG. 14 is a sectional view of an optical fiber connector plug according to an embodiment of the present disclosure; and
FIG. 15 is a diagram of a structure of an optical fiber connector according to an embodiment of the present disclosure.

### DESCRIPTION OF EMBODIMENTS

Terms used in implementations of the present disclosure are merely used for explaining embodiments of the present disclosure, but are not intended to limit the present disclosure. Unless otherwise defined, technical terms or scientific terms used in the implementations of the present disclosure should have meanings as those usually understood by a person of ordinary skill in the art to which the present disclosure belongs. Terms such as "first", "second", and "third" used in the specification and the claims of the present disclosure are not intended to indicate any order, quantity, or significance, but are merely used for distinguishing between different components. Likewise, terms such as "a/an" and "one" are not intended to indicate a quantity limitation either, but are intended to indicate "at least one". Terms such as "include" and "comprise" mean that an element or an object before the term "include" or "comprise" encompasses elements or objects and equivalents thereof listed after the term "include" or "comprise", and other elements or objects are not excluded. Terms such as "connection" and "link" are not limited to a physical or mechanical connection, but may include an electrical connection, regardless of a direct connection or an indirect connection. Terms such as "upper", "lower", "left", and "right" merely indicate a relative positional relationship. When an absolute position of an object described changes, the relative positional relationship may also correspondingly change.

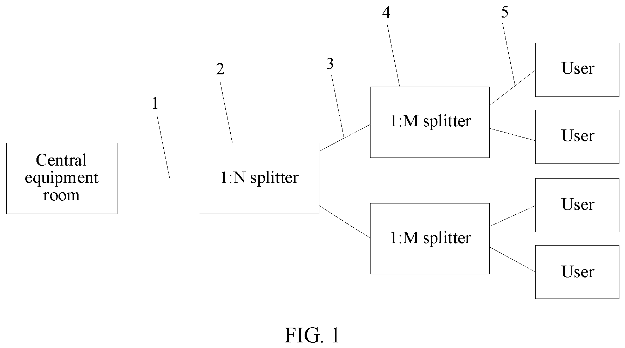

FIG. 1 is a diagram of a structure of an optical network according to an embodiment of the present disclosure. The figure shows a part of an FTTx optical network. FTTx may be FTTH (fiber to the home, fiber to the home), FTTC (fiber to the curb, fiber to the curb), FTTP (fiber to the premises, fiber to the premises), FTTN (fiber to the node or neighborhood, fiber to the node or neighborhood), FTTO (fiber to the office, fiber to the office), or FTTSA (fiber to the service area, fiber to the service area). In an FTTH network example, from a central equipment room to downstream, the FTTH network includes a feeder link 1, a 1:N splitter 2, a wiring link 3, a 1:M splitter 4, and at least one branch link 5, where N and M are both positive integers.

For example, an optical fiber connector is applicable to a connection to an optical fiber in the branch link 5. In addition, although a type of network using an FTTx structure is used as an example in the present disclosure, in another network structure, the optical fiber connector provided in embodiments of the present disclosure may also be used for the connection of the optical fiber.

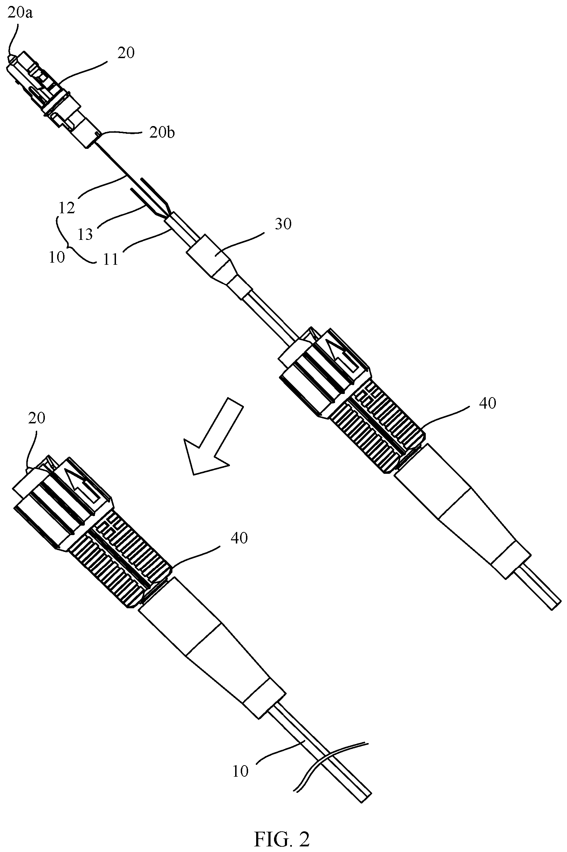

FIG. 2 is a diagram of a structure of an optical fiber connector plug according to an embodiment of the present disclosure. As shown in FIG. 2, the optical fiber connector plug includes a plug assembly 20, a pressure sleeve 30, and an outer housing kit 40. For ease of description, FIG. 2 further shows an optical cable 10 connected to the optical fiber connector plug.

The plug assembly 20 has a front end 20a and a rear end 20b. The front end 20a of the plug assembly 20 is configured to match an optical fiber adapter, and the rear end 20b is used for insertion of the optical cable 10.

The optical cable 10 includes a sheath 11, an optical fiber 12, and a strength member 13, and the optical fiber 12 and the strength member 13 are wrapped in the sheath 11. When the optical cable 10 is connected to the optical fiber connector plug, the optical cable 10 needs to be stripped first, a part of the sheath 11 at an end of the optical cable 10 is stripped to expose the optical fiber 12 and the strength member 13, and the optical fiber 12 is separated from the strength member 13. When the optical fiber connector plug is connected to the optical cable 10, the optical fiber 12 in the optical cable 10 is inserted from the rear end 20b of the plug assembly 20 and extends to the front end 20a.

The pressure sleeve 30 is connected to the rear end 20b of the plug assembly 20, and the pressure sleeve 30 is configured to fasten the optical cable 10. The outer housing kit 40 is sleeved outside the plug assembly 20 and the pressure sleeve 30, and the outer housing kit 40 is detachably connected to the plug assembly 20.

The plug assembly 20, the pressure sleeve 30, and the outer housing kit 40 are arranged, so that when the optical fiber connector plug is connected to the optical cable 10, the optical cable 10 may be inserted from the rear end 20b of the plug assembly 20, then the optical cable 10 is fastened by using the pressure sleeve 30, and finally the outer housing kit 40 is sleeved outside the plug assembly 20 and the pressure sleeve 30 and is connected to the plug assembly 20. The optical fiber connector plug has only three parts. This is simple in structure and easy for assembly, and facilitates automated production.

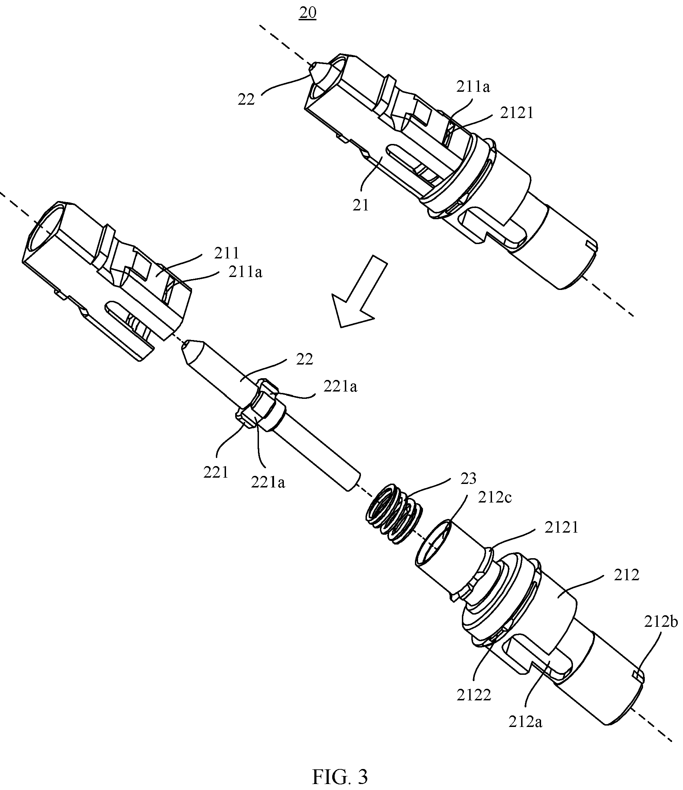

FIG. 3 is a diagram of a structure of a plug assembly according to an embodiment of the present disclosure. As shown in FIG. 3, the plug assembly 20 includes an inner housing kit 21 and a ferrule 22. The ferrule 22 is inserted into the inner housing kit 21, and the ferrule 22 is locked with the inner housing kit 21 in both an axial direction and a circumferential direction. In other words, the ferrule 22 cannot perform axial movement or circumferential rotation relative to the inner housing kit 21.

The ferrule 22 is a tubular structure and has a small inner diameter. When the optical fiber connector plug is connected to the optical cable 10, the optical fiber 12 in the optical cable 10 is inserted into the ferrule 22, and the optical fiber 12 is limited by the ferrule 22, to avoid shaking of the optical fiber 12. The plug assembly 20 is simple in structure, and the ferrule 22 is fastened by using the inner housing kit 21. When the optical fiber connector plug is assembled, it is convenient to first independently assemble the plug assembly 20, and then assemble the plug assembly 20 with the pressure sleeve 30 and the outer housing kit 40 in sequence. This facilitates operation, and facilitates assembly by using an automated production line.

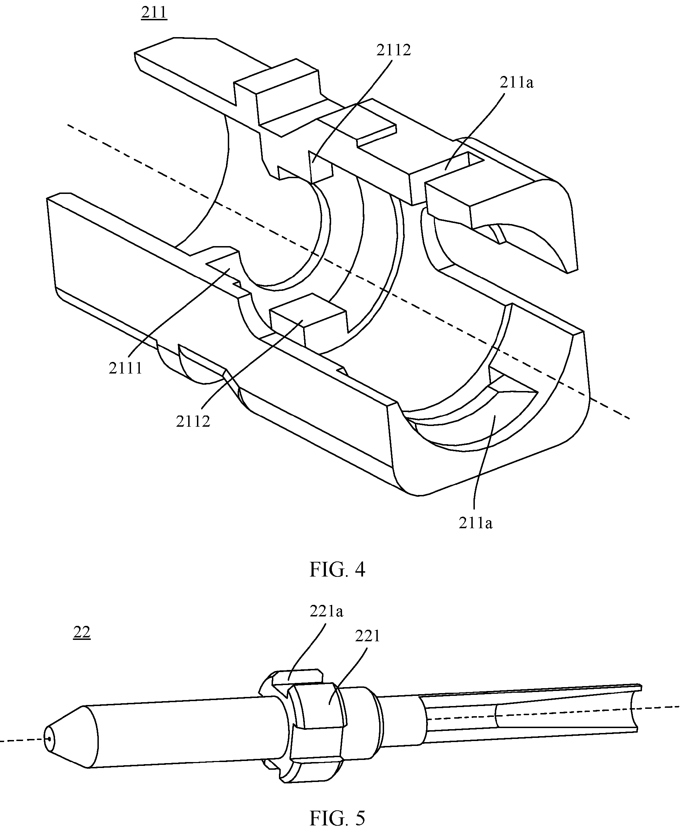

As shown in FIG. 3, the inner housing kit 21 includes an inner housing 211 and a support base 212. One end of the inner housing 211 is sleeved outside one end of the support base 212, and the inner housing 211 is detachably connected to the support base 212. The inner housing 211 is close to the front end 20a of the plug assembly 20, and the support base 212 is close to the rear end 20b of the plug assembly 20. FIG. 4 is a diagram of a structure of an inner housing according to an embodiment of the present disclosure. In FIG. 4, a part of a side wall of the inner housing 211 is removed. As shown in FIG. 4, an inner side wall of the inner housing 211 has a first inner flange 2111, and the first inner flange 2111 is opposite to an end portion of the support base 212.

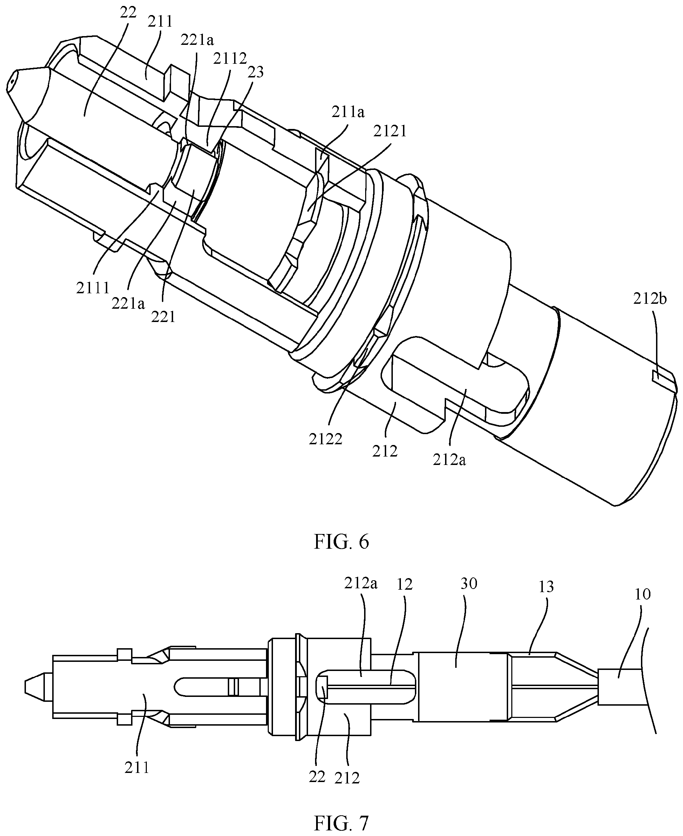

FIG. 5 is a diagram of a structure of a ferrule according to an embodiment of the present disclosure. As shown in FIG. 5, an outer side wall of the ferrule 22 has a first outer flange 221. FIG. 6 is a diagram of a structure of a plug assembly according to an embodiment of the present disclosure. In FIG. 6, at least the part of the side wall of the inner housing 211 is removed. As shown in FIG. 6, two ends of the ferrule 22 are respectively located in the inner housing 211 and the support base 212, and the first outer flange 221 is located between the first inner flange 2111 and the end portion of the support base 212.

After the ferrule 22 is assembled into the inner housing kit 21, the first outer flange 221 is matched by using the first inner flange 2111 of the inner housing 211 and the end portion of the support base 212, to limit the ferrule 22 in the axial direction, so that the ferrule 22 is locked with the inner housing kit 21 in the axial direction, to avoid loosening of the ferrule 22.

When the inner housing kit 21 is assembled, one end of the ferrule 22 may be inserted into the inner housing 211, then the support base 212 is sleeved onto the other end of the ferrule 22, and the end of the support base 212 is also inserted into the inner housing 211, so that the support base 212 is connected to the inner housing 211.

As shown in FIG. 3, the plug assembly 20 further includes an elastic component 23. The elastic component 23 is sleeved outside the ferrule 22, and the elastic component 23 is located on a side of the first outer flange 221 close to the support base 212. The elastic component 23 abuts against the first outer flange 221 and the support base 212.

Due to impact of various errors in a process, after the ferrule 22 is mounted in the inner housing kit 21, it is usually difficult for the first outer flange 221 to come into contact with both the first inner flange 2111 and an end face of the support base 212. Therefore, the ferrule 22 has specific movement in the axial direction. The elastic component 23 is arranged, so that the first outer flange 221 can be kept in contact with the first inner flange 2111 by using an elastic force of the elastic component 23, to avoid movement of the ferrule 22. In addition, when the optical fiber connector plug is interconnected to the optical fiber adapter, if the ferrule 22 is pushed by an external force at the front end 20a, the elastic component 23 may be further subject to specific deformation, so that the ferrule 22 is allowed to retract by a specific distance, to avoid damage to the ferrule 22.

For example, the end portion of the support base 212 may have a slot 212c, and the elastic component 23 is accommodated in the slot 212c, so that a structure of the plug assembly 20 is more compact. The elastic component 23 may be a spring, and the spring is sleeved outside the ferrule 22. Lateral bending of the spring may be further avoided by using the ferrule 22.

As shown in FIG. 4 and FIG. 5, the first outer flange 221 of the ferrule 22 further has a limiting notch 221a. A side of the first inner flange 2111 of the inner housing 211 close to the first outer flange 221 is provided with a first limiting protrusion 2112, and the first limiting protrusion 2112 is located in the limiting notch 221a.

When the ferrule 22 is mounted in the inner housing 211, the limiting notch 221a on the first outer flange 221 is aligned with the first limiting protrusion 2112 on the first inner flange 2111. After the ferrule 22 is mounted in place, the first limiting protrusion 2112 is located in the limiting notch 221a, to limit rotation of the ferrule 22, so that the ferrule 22 is locked with the inner housing 211 in the circumferential direction.

For example, there may be a plurality of limiting notches 221a and a plurality of first limiting protrusions 2112. For example, in this example, there are four limiting notches 221a, and the four limiting notches 221a are provided at intervals at an equal angle about an axis of the ferrule 22. There are two first limiting protrusions 2112, and the two first limiting protrusions 2112 are symmetrically arranged about an axis center of the inner housing 211.

In some examples, the inner housing 211 may be connected to the support base 212 through a thread.

In some other examples, the inner housing 211 may alternatively be clamped in the support base 212. In comparison with a threaded connection, assembly of the plug assembly 20 is more convenient through clamping.

As shown in FIG. 6, the inner side wall of the inner housing 211 has a first clamping slot 211a. An outer side wall of the support base 212 has a first boss 2121, and the first boss 2121 is located in the first clamping slot 211a. The first boss 2121 is clamped in the first clamping slot 211a.

The first boss 2121 is clamped in the first clamping slot 211a, so that when the inner housing 211 is connected to the support base 212, only the inner housing 211 and the support base 212 need to be pushed relative to each other. In this way, the first boss 2121 is clamped in the first clamping slot 211a, and a connection between the inner housing 211 and the support base 212 can be completed. This is easy for operation, and facilitates automated production.

In this example, the first clamping slot 211a penetrates through the inner side wall of the inner housing 211 to an outer side wall of the inner housing 211. In this way, whether the first boss 2121 is clamped in the first clamping slot 211a can be more directly observed from the outside. In another example, the first clamping slot 211a may not penetrate through the side wall of the inner housing 211, so that the inner housing 211 has higher structural strength.

As shown in FIG. 6, a side wall of the support base 212 has a window 212a. The window 212a is located outside the inner housing 211.

FIG. 7 is a side view of an optical fiber connector plug according to an embodiment of the present disclosure. In FIG. 7, at least the pressure sleeve 30 and the outer housing kit 40 are omitted. As shown in FIG. 7, an end portion at one end that is of the ferrule 22 and that is located in the support base 212 is located at the window 212a.

The window 212a penetrating through the side wall is arranged on the support base 212, and the end portion at the end that is of the ferrule 22 and that is located in the support base 212 is further arranged at the window 212a, so that a connection status between the end portion of the ferrule 22 and the optical fiber 12 can be observed through the window 212a, and an optical fiber connector plug not qualified for assembly can be found in time.

There may be a plurality of windows 212a. For example, there are two windows 212a on the side wall of the support base 212, and the two windows 212a are respectively located on two opposite sides of the support base 212, so that the end portion of the ferrule 22 can be observed from the two sides.

When the optical fiber connector plug is connected to the optical cable 10, the optical fiber 12 in the optical cable 10 is inserted into the ferrule 22. At the end that is of the ferrule 22 and that is located in the support base 212, the ferrule 22 is connected to the optical fiber 12 through a colloid, and a colloidal coating is formed at the end portion that is of the end of the ferrule 22 and that is located in the support base 212. When observation is performed through the window 212a, a status of the colloidal coating may be observed, to ensure that the optical fiber 12 is normally connected.

As shown in FIG. 6, the side wall of the support base 212 further has a limiting groove 212b, and the limiting groove 212b is located at an end portion at one end of the support base 212 away from the inner housing 211. The limiting groove 212b is configured to clamp the strength member 13 in the optical cable 10.

When the optical cable 10 is connected, after the sheath 11 of the optical cable 10 is stripped, the optical fiber 12 penetrates into the support base 212 and is inserted into the ferrule 22, and the strength member 13 is clamped in the limiting groove 212b, for example, as shown in FIG. 7, to tie the strength member 13. The strength member 13 is usually a bundle with high strength, such as a steel wire or an aramid line. The strength member 13 is connected to the support base 212 through the limiting groove 212b. When the optical fiber connector plug is pulled, a pulling force may be applied to the strength member 13, and an optical fiber 12 inserted into the plug assembly 20 is not subject to the pulling force, to avoid damage to the optical fiber 12.

A plurality of limiting grooves 212b may be provided on the side wall of the support base 212. For example, in this example, two limiting grooves 212b are provided on the side wall of the support base 212, and the two limiting grooves 212b are symmetrically provided about an axis center of the support base 212. There are usually at least two strength members 13 in the optical cable 10. The two strength members 13 are respectively clamped in the two limiting grooves 212b, so that the pulling force can be better applied to the two strength members 13.

As shown in FIG. 6, the outer side wall of the support base 212 further has a second boss 2122, and the second boss 2122 is configured to be clamped in the outer housing kit 40.

The second boss 2122 may be located between the first boss 2121 and the window 212a. After the plug assembly 20 and the pressure sleeve 30 are assembled, the outer housing kit 40 is sleeved outside the plug assembly 20, and the outer housing kit 40 is clamped by using the second boss 2122. This is simple in structure and convenient for assembly, and facilitates automated assembly of the optical fiber connector plug. For matching between the second boss 2122 and the outer housing kit 40, refer to related content in the following.

In FIG. 5, a part of a side wall of the ferrule 22 is removed. As shown in FIG. 5, at one end of the ferrule 22 close to the rear end 20b of the plug assembly 20, an inner wall of the ferrule 22 is in a tapered shape.

Because the ferrule 22 is configured to match the optical fiber 12 in the optical cable 10, and a diameter of the optical fiber 12 is small, the inner diameter of the ferrule 22 is also small. The optical fiber 12 is inserted from the end of the ferrule 22 close to the rear end 20b, and the inner wall of the ferrule 22 at the end of the ferrule 22 close to the rear end 20b is set to be in the tapered shape, so that the optical fiber 12 can be more easily inserted into the ferrule 22.

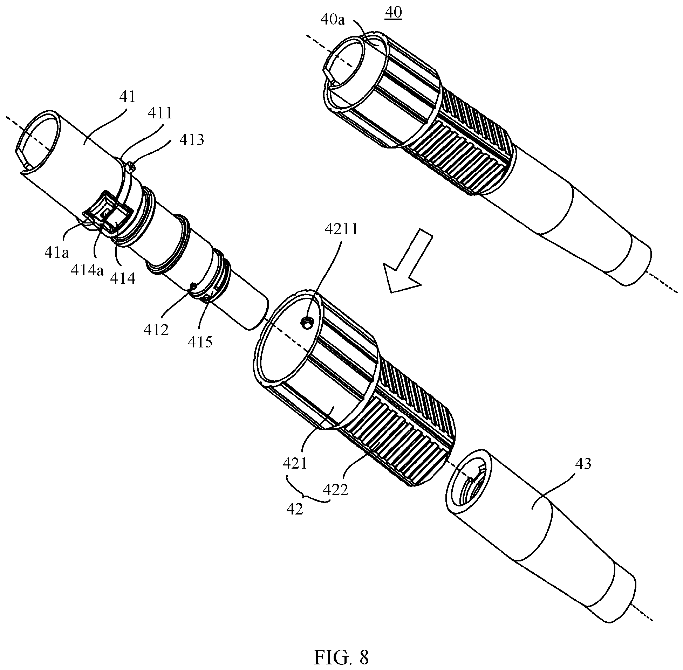

FIG. 8 is a diagram of a structure of an outer housing kit according to an embodiment of the present disclosure. As shown in FIG. 8, the outer housing kit 40 includes an inner tube 41 and an outer tube 42, and the outer tube 42 is sleeved outside the inner tube 41.

The outer tube 42 is locked with the inner tube 41 in the axial direction and rotatable relative to the inner tube 41. That is, the outer tube 42 is rotatable relative to the inner tube 41, but cannot move in the axial direction.

The inner tube 41 is sleeved outside the plug assembly 20. An annular interconnection slot 40a is formed between the inner tube 41 and the outer tube 42, and the annular interconnection slot 40a is close to the front end 20a. The annular interconnection slot 40a is configured to match the optical fiber adapter.

Because the outer tube 42 is locked with the inner tube 41 in the axial direction, before the optical fiber connector plug is assembled, the inner tube 41 and the outer tube 42 may be assembled in advance. This facilitates automated assembly of the optical fiber connector plug.

The optical fiber connector plug is connected to the optical fiber adapter through the outer tube 42. The outer tube 42 is sleeved outside the inner tube 41 and can rotate. After the optical fiber connector plug is interconnected to the optical fiber adapter, the outer tube 42 can be connected to the optical fiber adapter by rotating the outer tube 42.

As shown in FIG. 8, the outer tube 42 includes an interconnection segment 421 and a connection segment 422, and one end of the interconnection segment 421 is connected to one end of the connection segment 422. An inner diameter of the interconnection segment 421 is greater than an inner diameter of the connection segment 422. When the outer housing kit 40 is sleeved outside the plug assembly 20, the interconnection segment 421 is closer to the front end 20a than the connection segment 422. The annular interconnection slot 40a is formed between the interconnection segment 421 and an outer wall of the inner tube 41. The connection segment 422 is configured to match the inner tube 41, so that the outer tube 42 is locked with the inner tube 41 in the axial direction, and is further rotatable relative to the inner tube 41.

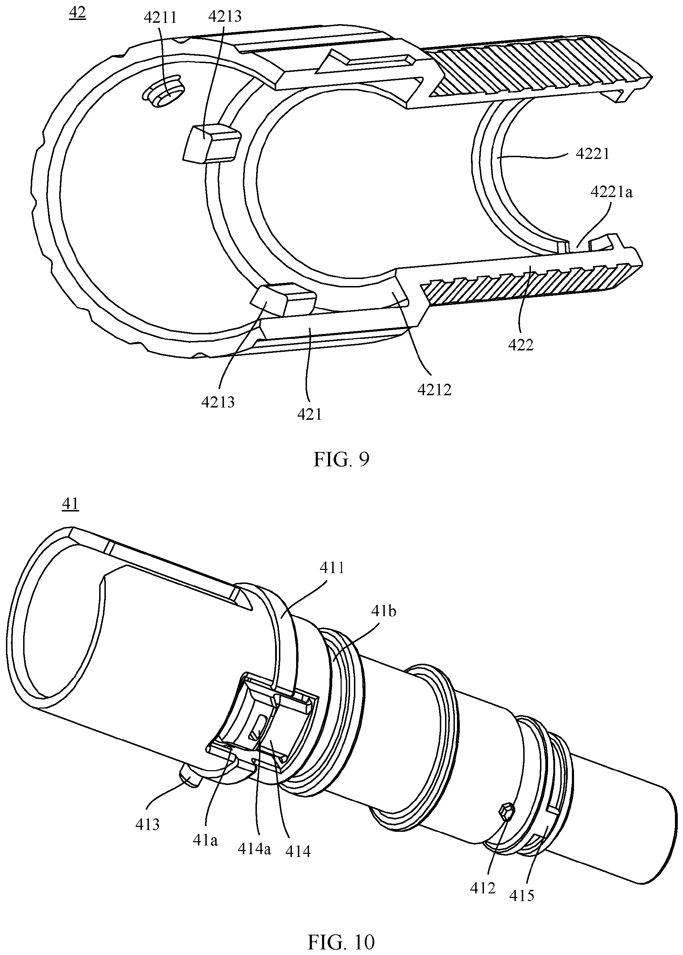

FIG. 9 is a diagram of a structure of an outer tube according to an embodiment of the present disclosure. In FIG. 9, a part of a side wall of the outer tube is removed. As shown in FIG. 9, an inner side wall of the interconnection segment 421 has a locking protrusion 4211. When the optical fiber connector plug is interconnected to the optical fiber adapter, the locking protrusion 4211 slides into a corresponding locking slot on the optical fiber adapter, and the locking slot is usually in an L shape. After the outer tube 42 is rotated, the locking protrusion 4211 moves to a locking position and is clamped in the locking slot, so that the optical fiber connector plug cannot be reversely pulled out from the optical fiber adapter. After the outer tube 42 is reversely rotated by a specific angle, the locking protrusion 4211 moves to an unlocking position in the locking slot. In this case, if the optical fiber connector plug is reversely pulled, the optical fiber connector plug can be pulled out from the optical fiber adapter.

Refer to FIG. 9. An inner side wall of the outer tube 42 has a first axial limiting portion 4212 and a second axial limiting portion 4221, and the first axial limiting portion 4212 and the second axial limiting portion 4221 are distributed at intervals in an axial direction of the outer tube 42. The first axial limiting portion 4212 is closer to the front end 20a than the second axial limiting portion 4221.

FIG. 10 is a diagram of a structure of an inner tube according to an embodiment of the present disclosure. As shown in FIG. 10, an outer side wall of the inner tube 41 has a first stop portion 411 and a second stop portion 412. The first stop portion 411 and the second stop portion 412 are distributed at intervals in an axial direction of the inner tube 41. The first stop portion 411 is closer to the front end 20a than the second stop portion 412.

When the outer tube 42 is sleeved outside the inner tube 41, the first axial limiting portion 4212 and the second axial limiting portion 4221 are located between the first stop portion 411 and the second stop portion 412, the first axial limiting portion 4212 abuts against the first stop portion 411, and the second axial limiting portion 4221 abuts against the second stop portion 412.

The outer tube 42 is limited in the axial direction from two ends through the first stop portion 411 and the second stop portion 412 respectively, so that the outer tube 42 and the inner tube 41 are mutually locked in the axial direction.

Herein, that the axial limiting portion abuts against the stop portion means that a gap between the axial limiting portion and the stop portion is very small. When the outer tube 42 generates slight axial displacement relative to the inner tube 41, the axial limiting portion at one end of the outer tube 42 comes into contact with the stop portion, to prevent the outer tube 42 from further moving relative to the inner tube 41 in the axial direction. Process precision, including manufacturing precision and assembly precision, affects a size of the gap between the axial limiting portion and the stop portion. For a different optical fiber connector plug, an allowed range of the gap between the axial limiting portion and the stop portion is also different, and it may be considered that the axial limiting portion abuts against the stop portion, provided that the allowed range is not exceeded.

In this example, as shown in FIG. 9, the first axial limiting portion 4212 includes an inner spigot, the second axial limiting portion 4221 includes a second inner flange, and an inner diameter of the inner spigot is not less than an outer diameter of the second inner flange. The second inner flange has a first avoidance notch 4221a, and the first avoidance notch 4221a is for allowing the second stop portion 412 to pass through.

In this embodiment of the present disclosure, the outer tube 42 includes the interconnection segment 421 and the connection segment 422. Because the inner diameter of the interconnection segment 421 is greater than the inner diameter of the connection segment 422, the inner spigot is formed at a joint between the interconnection segment 421 and the connection segment 422. The second inner flange is located at one end of the connection segment 422 away from the interconnection segment 421. Because the inner diameter of the inner spigot is not less than the outer diameter of the second inner flange, the outer tube 42 may be sleeved from a tail end of the inner tube 41, so that the inner spigot is not blocked by the second stop portion 412. The tail end of the inner tube 41 is one end of the inner tube 41 away from the front end 20a, that is, one end of the inner tube 41 away from the optical fiber adapter when the optical fiber connector plug is interconnected to the optical fiber adapter. When the outer tube 42 is sleeved, the outer tube 42 may be rotated, so that the first avoidance notch 4221a is aligned with the second stop portion 412. As the outer tube 42 is sleeved, the second stop portion 412 passes through the first avoidance notch 4221a, and the inner spigot comes into contact with the first stop portion 411. In this case, if the outer tube 42 is rotated again, the first avoidance notch 4221a is staggered from the second stop portion 412. In this way, the outer tube 42 can be locked with the inner tube 41 in the axial direction. When the outer tube 42 and the inner tube 41 need to be disassembled, the outer tube 42 is rotated again, so that the first avoidance notch 4221a is aligned with the second stop portion 412, and then the outer tube 42 is pulled away.

As shown in FIG. 10, the first stop portion 411 may include a second outer flange, and the second stop portion 412 may include a protrusion. The second outer flange may have a large contact area with the first stop portion 411, so that the first stop portion 411 can be better blocked. The protrusion is small in size. This is convenient for the protrusion to pass through the first avoidance notch 4221a.

Structures that match each other may be further arranged on the inner tube 41 and the outer tube 42, to limit a rotation angle of the outer tube 42. For example, as shown in FIG. 9, there are two second limiting protrusions 4213 on the inner spigot, and the two second limiting protrusions 4213 are spaced from each other. The outer side wall of the inner tube 41 has a third limiting protrusion 413. When the outer tube 42 is sleeved outside the inner tube 41, the third limiting protrusion 413 is located in the interconnection segment 421, and is located between the two second limiting protrusions 4213. In this way, when relative rotation occurs between the outer tube 42 and the inner tube 41, the third limiting protrusion 413 moves between the two second limiting protrusions 4213. After the outer tube 42 rotates in a direction until the third limiting protrusion 413 comes into contact with one second limiting protrusion 4213, the outer tube 42 cannot continue to rotate in the direction, and can only reversely rotate.

As shown in FIG. 10, a side wall of the inner tube 41 has an opening 41a, a side edge of the opening 41a is connected to a fastener 414, and the fastener 414 is clamped in the plug assembly 20.

The fastener 414 is configured to be clamped in the second boss 2122 on the outer side wall of the support base 212. The fastener 414 has a second clamping slot 414a. When the fastener 414 is clamped in the second boss 2122, the second boss 2122 is located in the second clamping slot 414a. When the outer housing kit 40 is sleeved onto the plug assembly 20, the outer housing kit 40 is sleeved from the rear end 20b of the plug assembly 20, and the outer housing kit 40 is pushed toward the front end 20a, so that the fastener 414 can be clamped in the second boss 2122. This is easy for operation, and facilitates automated production.

In an example, the fastener 414 is connected to a side edge of the opening 41a close to the tail end. In another example, the fastener 414 may alternatively be connected to another side edge of the opening 41a, provided that the fastener 414 can be clamped in the second boss 2122.

As shown in FIG. 10, the outer side wall of the inner tube 41 may further have a sealing slot 41b, and the sealing slot 41b is configured to arrange a sealing ring therein. The sealing slot 41b may be located on a side of the opening 41a close to the tail end of the inner tube 41. After the inner tube 41 is connected to the outer tube 42, the sealing ring is attached to an inner wall of the connection segment 422 of the outer tube 42, to achieve a sealing function.

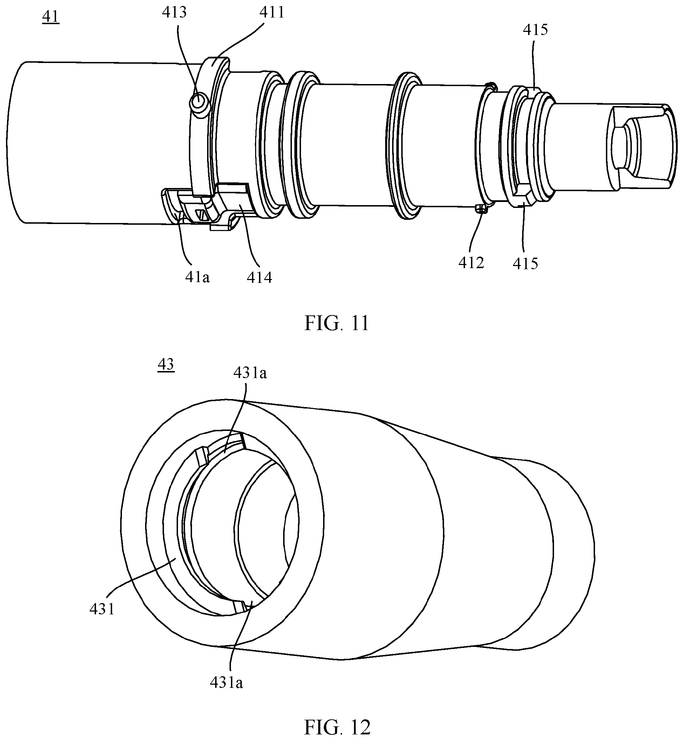

FIG. 11 is a diagram of a structure of an inner tube according to an embodiment of the present disclosure. In FIG. 11, at least a part of the side wall of the inner tube 41 is removed. As shown in FIG. 11, at one end of the inner tube 41 away from the annular interconnection slot 40a, an inner wall of the inner tube 41 is in a tapered shape.

The end of the inner tube 41 away from the annular interconnection slot 40a is the tail end of the inner tube 41. An inner wall of the tail end is set to be in a tapered shape, so that the inner tube 41 can be conveniently sleeved outside the optical cable 10. In addition, this can further facilitate sealing of the inner tube 41. For example, a rubber stopper is inserted into the tail end of the inner tube 41, the rubber stopper is sleeved outside the optical cable, and sealing is performed by using the rubber stopper. For another example, the tail end of the inner tube 41 is filled with a sealant for sealing, to isolate external water vapor, dust, and the like.

As shown in FIG. 8, the outer housing kit 40 further includes a tail tube 43, the tail tube 43 is located at one end of the outer tube 42 away from the annular interconnection slot 40a, and the tail tube 43 is sleeved outside the inner tube 41.

The tail tube 43 is configured to shield a sealing position of the tail end of the inner tube 41, to provide protection. This facilitates prolongation of a service life of the optical fiber connector plug. When the optical cable 10 is subject to an external force and is bent at the tail tube 43, the tail tube 43 can avoid damage caused by excessive bending of the optical cable 10.

FIG. 12 is a diagram of a structure of a tail tube according to an embodiment of the present disclosure. As shown in FIG. 12, an inner side wall of the tail tube 43 may have a third inner flange 431, and an inner side of the third inner flange 431 has a second avoidance notch 431a.

As shown in FIG. 11, the outer side wall of the inner tube 41 has a protrusion portion 415, and the second avoidance notch 431a on the third inner flange 431 is used for avoidance of the protrusion portion 415. When the tail tube 43 is assembled, the second avoidance notch 431a may be enabled to be aligned with the protrusion portion 415, and the tail tube 43 is sleeved onto the inner tube 41. After the protrusion portion 415 passes through the second avoidance notch 431a, the tail tube 43 is rotated, so that the second avoidance notch 431a is staggered from the protrusion portion 415. The tail tube 43 and the inner tube 41 are connected through matching between the third inner flange 431 and the protrusion portion 415. This is simple in structure and convenient for operation, and facilitates automated production.

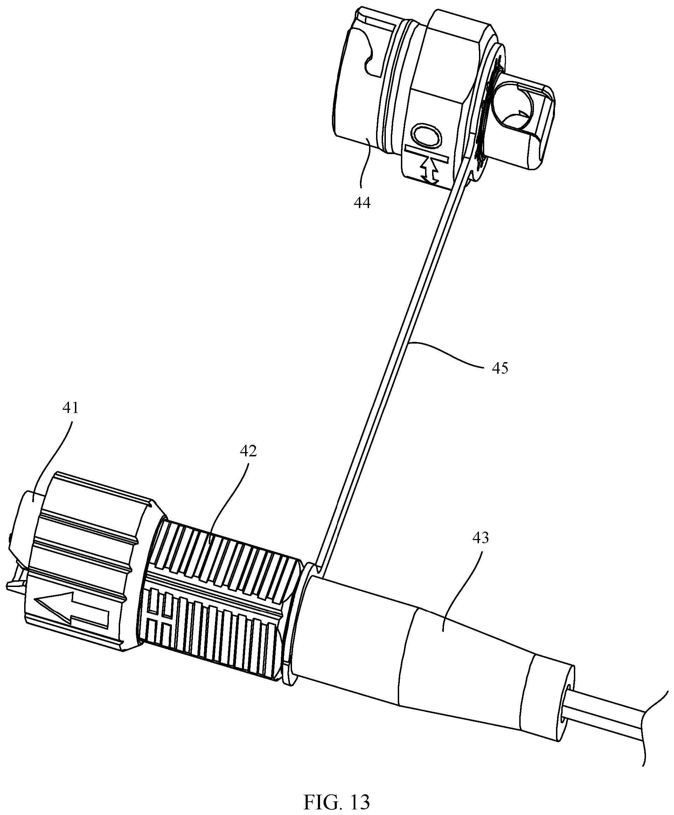

FIG. 13 is a diagram of a structure of an optical fiber connector plug according to an embodiment of the present disclosure. As shown in FIG. 13, the optical fiber connector plug may further include a protective cover 44 and a flexible connecting component 45. One end of the flexible connecting component 45 is connected to the outer housing kit 40, and the other end is connected to the protective cover 44. The protective cover 44 is configured to be connected to an end portion of the outer housing kit 40, to cover the front end 20a of the plug assembly 20, and achieve a protection function. When the optical fiber connector plug is connected, the protective cover 44 is removed.

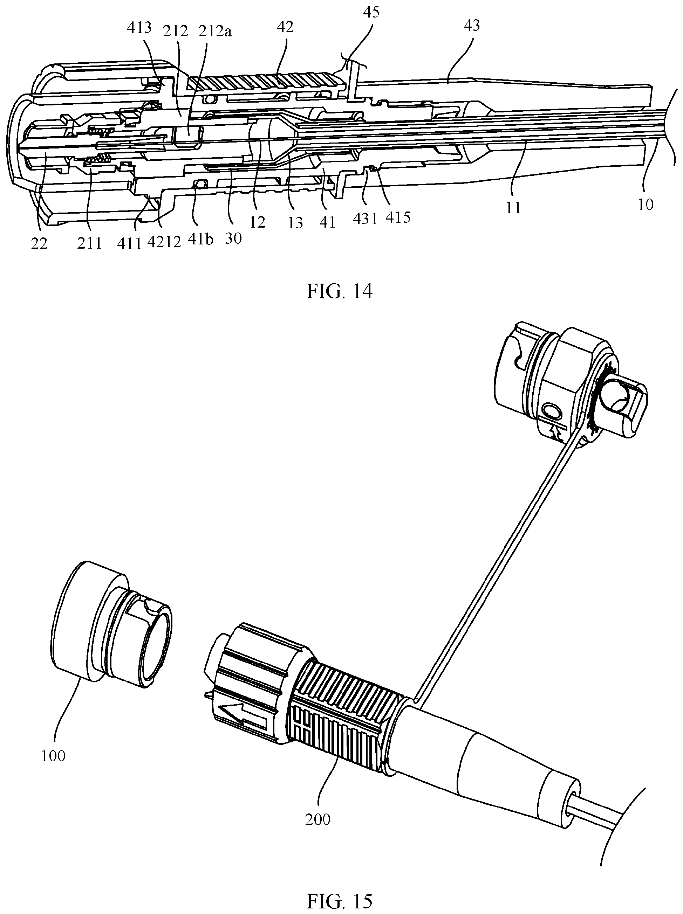

FIG. 14 is a sectional view of an optical fiber connector plug according to an embodiment of the present disclosure. The following briefly describes assembly of the optical fiber connector plug shown in FIG. 14 with reference to FIG. 2 to FIG. 13.

First, the plug assembly 20 and the outer housing kit 40 are assembled. Both the plug assembly 20 and the outer housing kit 40 may be assembled by using an automated device, or may be assembled in a manual manner.

When the plug assembly 20 is assembled, the end of the ferrule 22 is inserted into the inner housing 211, so that the first limiting protrusion 2112 on the first outer flange 221 is located in the limiting notch 221a on the first outer flange 221; and the other end of the ferrule 22 is sleeved onto the elastic component 23, and then inserted into the support base 212, so that the first boss 2121 is clamped in the first clamping slot 211a. In this way, assembly of the plug assembly 20 is completed.

When the outer housing kit 40 is assembled, the outer tube 42 is sleeved outside the inner tube 41, the second stop portion 412 is enabled to pass through the first avoidance notch 4221a on the second inner flange, and the outer tube 42 is rotated, so that the first avoidance notch 4221a is staggered from the second stop portion 412. The end of the flexible connecting component 45 is connected to the tail end of the inner tube 41 exposed outside the outer tube 42. The tail tube 43 is sleeved onto the tail end of the inner tube 41, so that the protrusion portion 415 on the outer side wall of the inner tube 41 is aligned with the second avoidance notch 431a on the third inner flange 431. The tail tube 43 continues to be pushed, so that the protrusion portion 415 passes through the second avoidance notch 431a. Then the tail tube 43 is rotated. In this way, assembly of the outer housing kit 40 is completed. The protective cover 44 may be connected to the flexible connecting component 45 before the outer housing kit 40 is assembled, or may be connected to the flexible connecting component 45 after assembly of the outer housing kit 40 is completed.

Then, the optical cable 10 is processed. The optical cable 10 may be processed by using an automated device, or may be manually processed by a worker. The sheath 11 is stripped at an end portion of the optical cable 10 to expose the optical fiber 12 and the strength member 13 by a specific length.

Next, fiber threading is performed. Fiber threading may also be performed by using an automated device, or may be manually performed by a worker. During the fiber threading, the outer housing kit 40 is first sleeved outside the optical cable 10, the optical cable 10 penetrates from the tail tube 43 and penetrates out of the inner tube 41, and then the pressure sleeve 30 is sleeved outside the optical cable 10. After that, the optical fiber 12 penetrates from the rear end 20b of the plug assembly 20, so that the optical fiber 12 penetrates into the plug assembly 20 and extends out from the front end 20a by a specific length. The strength member 13 is clamped in the limiting groove 212b.

Next, crimping is performed. Likewise, crimping may also be performed by using an automated device, or may be manually performed by a worker. The pressure sleeve 30 is sleeved onto the end of the support base 212 away from the inner housing 211, and covers the limiting groove 212b. The pressure sleeve 30 is squeezed through a jaw of a crimping tool, so that the pressure sleeve 30 is deformed, and the strength member 13 is tightly pressed, to fasten the optical cable 10.

After that, curing is performed. The ferrule 22 may be filled with an adhesive, and the curing means curing the adhesive in the ferrule 22. For example, curing is performed in a heating manner, so that the optical fiber 12 is fastened.

Subsequently, the optical fiber 12 is ground from the front end 20a of the plug assembly 20. The grinding may include processes such as adhesive removal, coarse grinding, cleaning, fine grinding, cleaning, polishing, cleaning, and drying. A specific grinding manner may be the same as that in related technologies.

Finally, the outer housing kit 40 is sleeved outside the plug assembly 20, so that the fastener 414 of the inner tube 41 is clamped in the second boss 2122 of the support base 212. In this way, assembly of the optical fiber connector plug is completed. Likewise, the outer housing kit 40 and the plug assembly 20 may also be connected by using an automated device, or may be manually connected by a worker.

After assembly of the optical fiber connector plug is completed, the optical fiber connector plug may be further detected. For example, optical performance detection is performed by using an optical insertion loss tester, to ensure that performance of the optical fiber connector plug meets a requirement.

The foregoing descriptions of an assembly process are merely an example, and a sequence of some steps may be changed. For example, grinding may alternatively be performed after the outer housing kit 40 is connected to the plug assembly 20.

FIG. 15 is a diagram of a structure of an optical fiber connector according to an embodiment of the present disclosure. As shown in FIG. 15, the optical fiber connector includes an optical fiber adapter 100 and an optical fiber connector plug 200. The optical fiber connector plug 200 is any one of optical fiber connector plugs shown in FIG. 2 to FIG. 14. The optical fiber adapter 100 is detachably connected to the optical fiber connector plug 200.

The foregoing descriptions are merely an embodiment of the present disclosure, but are not intended to limit the present disclosure. Any modification, equivalent replacement, improvement, or the like made within the principle of the present disclosure should fall within the protection scope of the present disclosure.

## Claims

1. An optical fiber connector plug, comprising a plug assembly (20), a pressure sleeve (30), and an outer housing kit (40), wherein
the plug assembly (20) has a front end (20a) and a rear end (20b), the front end (20a) is configured to match an optical fiber adapter, and the rear end (20b) is used for insertion of an optical cable (10);
the pressure sleeve (30) is connected to the rear end (20b), and is configured to fasten the optical cable (10); and
the outer housing kit (40) is sleeved outside the plug assembly (20) and the pressure sleeve (30), and is detachably connected to the plug assembly (20).

2. The optical fiber connector plug according to claim 1, wherein the plug assembly (20) comprises an inner housing kit (21) and a ferrule (22), and the ferrule (22) is inserted into the inner housing kit (21) and is locked with the inner housing kit (21) in both an axial direction and a circumferential direction.

3. The optical fiber connector plug according to claim 2, wherein the inner housing kit (21) comprises an inner housing (211) and a support base (212), an inner side wall of the inner housing (211) has a first inner flange (2111), one end of the inner housing (211) is sleeved outside one end of the support base (212), the inner housing (211) is detachably connected to the support base (212), and the first inner flange (2111) is opposite to an end portion of the support base (212); and
an outer side wall of the ferrule (22) has a first outer flange (221), two ends of the ferrule (22) are respectively located in the inner housing (211) and the support base (212), and the first outer flange (221) is located between the first inner flange (2111) and the end portion of the support base (212).

4. The optical fiber connector plug according to claim 3, wherein the first outer flange (221) has a limiting notch (221a), a side of the first inner flange (2111) close to the first outer flange (221) is provided with a first limiting protrusion (2112), and the first limiting protrusion (2112) is located in the limiting notch (221a).

5. The optical fiber connector plug according to claim 3 or 4, wherein the plug assembly (20) further comprises an elastic component (23), and the elastic component (23) is sleeved outside the ferrule (22), is located on a side of the first outer flange (221) close to the support base (212), and abuts against the first outer flange (221) and the support base (212).

6. The optical fiber connector plug according to any one of claims 3 to 5, wherein the inner side wall of the inner housing (211) has a first clamping slot (211a), an outer side wall of the support base (212) has a first boss (2121), and the first boss (2121) is located in the first clamping slot (211a) and is clamped in the first clamping slot (211a).

7. The optical fiber connector plug according to any one of claims 3 to 6, wherein a side wall of the support base (212) has a window (212a), the window (212a) is located outside the inner housing (211), and an end portion at one end that is of the ferrule (22) and that is located in the support base (212) is located at the window (212a).

8. The optical fiber connector plug according to any one of claims 3 to 7, wherein the side wall of the support base (212) has a limiting groove (212b), the limiting groove (212b) is located at an end portion at an end of the support base (212) away from the inner housing (211), and the limiting groove (212b) is configured to clamp a strength member (13) in the optical cable (10).

9. The optical fiber connector plug according to any one of claims 3 to 8, wherein the outer side wall of the support base (212) has a second boss (2122), and the second boss (2122) is clamped in the outer housing kit (40).

10. The optical fiber connector plug according to any one of claims 2 to 9, wherein at one end of the ferrule (22) close to the rear end (20b), an inner wall of the ferrule (22) is in a tapered shape.

11. The optical fiber connector plug according to any one of claims 2 to 10, wherein the outer housing kit (40) comprises an inner tube (41) and an outer tube (42), the outer tube (42) is sleeved outside the inner tube (41), the outer tube (42) is locked with the inner tube (41) in the axial direction and rotatable relative to the inner tube (41), the inner tube (41) is sleeved outside the plug assembly (20), an annular interconnection slot (40a) is formed between the inner tube (41) and the outer tube (42), and the annular interconnection slot (40a) is close to the front end (20a) and is used to match the optical fiber adapter.

12. The optical fiber connector plug according to claim 11, wherein an outer side wall of the inner tube (41) has a first stop portion (411) and a second stop portion (412), and the first stop portion (411) and the second stop portion (412) are distributed at intervals in an axial direction of the inner tube (41);
an inner side wall of the outer tube (42) has a first axial limiting portion (4212) and a second axial limiting portion (4221), and the first axial limiting portion (4212) and the second axial limiting portion (4221) are distributed at intervals in an axial direction of the outer tube (42); and
the first axial limiting portion (4212) and the second axial limiting portion (4221) are located between the first stop portion (411) and the second stop portion (412), the first axial limiting portion (4212) abuts against the first stop portion (411), and the second axial limiting portion (4221) abuts against the second stop portion (412).

13. The optical fiber connector plug according to claim 12, wherein the first axial limiting portion (4212) comprises an inner spigot, the second axial limiting portion (4221) comprises a second inner flange, and an inner diameter of the inner spigot is not less than an outer diameter of the second inner flange; and
the second inner flange has a first avoidance notch (4221a) for allowing the second stop portion (412) to pass through.

14. The optical fiber connector plug according to any one of claims 11 to 13, wherein a side wall of the inner tube (41) has an opening (41a), a side edge of the opening (41a) is connected to a fastener (414), and the fastener (414) is clamped in the plug assembly (20).

15. The optical fiber connector plug according to any one of claims 11 to 14, wherein at one end of the inner tube (41) away from the annular interconnection slot (40a), an inner wall of the inner tube (41) is in a tapered shape.

16. The optical fiber connector plug according to any one of claims 11 to 15, wherein the outer housing kit (40) further comprises a tail tube (43), and the tail tube (43) is located at one end of the outer tube (42) away from the annular interconnection slot (40a) and is sleeved outside the inner tube (41).

17. An optical fiber connector, comprising an optical fiber adapter (100) and the optical fiber connector plug (200) according to any one of claims 1 to 16, wherein the optical fiber adapter (100) is detachably connected to the optical fiber connector plug (200).
